# FASCICULE DE BREVET EUROPEEN

(11) **EP 3 083 372 B1**
(45) Date de publication et mention de la délivrance du brevet: **04.04.2018**
(21) Numéro de dépôt: 14798912.3
(22) Date de dépôt: 09.10.2014
(51) Int. Cl.: B62D 25/08, B62D 25/16

(54) **AGENCEMENT DE CARROSSERIE D'UN VÉHICULE AUTOMOBILE COMPRENANT UN OBTURATEUR LATÉRAL DE GRILLE D'AUVENT**
KRAFTFAHRZEUGKAROSSERIEANORDNUNG MIT SEITENDICHTUNG EINES HAUBENENTLÜFTUNGSGITTERS
MOTOR VEHICLE BODY ARRANGEMENT COMPRISING A SIDE SEAL OF A COWL VENT GRILLE

(30) Priorité: 18.12.2013 FR 1362846
(43) Date de publication de la demande: 26.10.2016
(73) Titulaire: Renault S.A.S., 92100 Boulogne-Billancourt (FR)
(72) Inventeur: DEYSSON, Guillaume, F-78180 Montigny Le Bretonneux (FR); ROBIN, Anne, F-78280 Guyancourt (FR); ANNETTE, Richard, F-78120 Rambouillet (FR)
(86) Numéro de dépôt international: PCT/FR2014/052554
(87) Numéro de publication internationale: WO 2015/092171

(56) Documents cités:
- EP-A1- 2 489 578
- US-A1- 2013 076 073

## Description

### Domaine de l'invention :

La présente invention concerne un agencement de carrosserie d'un véhicule automobile, et plus précisément un agencement dans la zone latérale inférieure du pare-brise.

### Etat de la technique :

De chaque côté du véhicule, on connaît des agencements dans lesquels la zone latérale inférieure du pare-brise comprend une pièce de carrosserie dénommée « obturateur latéral de grille d'auvent » (ou « OLGA »), cette pièce étant destinée à fermer un espace délimité d'une part par le bord latéral du pare-brise et d'autre part par l'aile ou le support d'aile adjacent.
Les agencements connus ne donnent pas complètement satisfaction compte tenu des dispersions géométriques de fabrication et d'assemblage constatées dans cette zone. Le véhicule US 2013/076073 A1 décrit un tel agencement connu. D'un véhicule à l'autre, la position transversale du pare-brise et de la traverse inférieure de baie peuvent varier de quelques millimètres par rapport à l'aile et au support d'aile, en raison de ces dispersions. Les obturateurs latéraux connus sont inadaptés à ces écarts géométriques et subissent eux même des dilatations qui peuvent encore dégrader les jeux et/ou contraintes entre les éléments dans cette zone. En outre cette zone est très visible de l'extérieur, de sorte que des défauts de géométrie dans cette zone sont fortement préjudiciables à la qualité perçue par l'utilisateur du véhicule.

### But de l'invention :

L'invention a pour but de pallier tout ou partie des inconvénients précédents en proposant un obturateur latéral qui tienne compte des dispersions géométriques dans l'assemblage des éléments en présence et des effets de dilatations de l'obturateur lui-même.

### Objet de l'invention :

A cet effet, l'invention a pour objet un agencement de carrosserie d'un véhicule automobile comprenant un pare-brise, une traverse inférieure de baie s'étendant le long d'un bord inférieur du pare-brise et s'étendant transversalement au véhicule, une aile et un support d'aile étant disposés de chaque côté du véhicule de façon à encadrer la traverse inférieure de baie avec un espace ménagé entre chaque aile et un bord latéral adjacent du pare-brise, l'agencement comprenant un obturateur latéral fermant ledit espace, l'obturateur latéral ayant la forme générale d'une équerre, caractérisé en ce qu' une branche inférieure de l'équerre en contact avec le bord latéral du pare-brise et une branche supérieure est accrochée sur l'aile adjacente, les branches étant reliées par une partie d'angle formant charnière apte à se déformer pour absorber les dispersions géométriques et les déformations relatives entre d'une part le pare-brise et la traverse inférieure de baie et d'autre part l'aile et le support d'aile.
L'agencement de l'invention comprend donc un obturateur déformable élastiquement qui s'adapte parfaitement aux dispersions géométriques et permet de les compenser tout en fermant efficacement l'espace entre d'une part le bord latéral du pare-brise et d'autre part l'aile et le support d'aile. L'obturateur est également adaptatif en fonction des effets de dilatation.
Selon d'autres caractéristiques avantageuses de l'invention :
- l'obturateur interposé entre le bord latéral du pare-brise et l'aile adjacente est déformé élastiquement et oppose un effort résistant sur le bord latéral du pare-brise appliqué vers l'intérieur du véhicule suivant la direction transversale et vers le haut,
- la branche inférieure de l'obturateur latéral comporte un renfoncement dans lequel est placé le bord latéral du pare-brise de façon que ce dernier et la branche inférieure présentent des faces supérieures sensiblement affleurantes,
- le renfoncement est conformé dans une forme en équerre bordant la branche inférieure de l'obturateur l'équerre ayant une partie horizontale disposée de façon à recouvrir un bord latéral correspondant de la traverse inférieure de baie,
- la branche inférieure est disposée sensiblement dans le prolongement du pare-brise, de façon sensiblement parallèle à celui-ci,
- la branche supérieure de l'obturateur latéral est disposée en appui contre une face sensiblement verticale de l'aile adjacente, la branche supérieure comprenant au moins une patte de retenue introduite dans un orifice correspondant de l'aile,
- la partie d'angle a une épaisseur réduite rapport aux branches inférieure et supérieure.

L'invention a également pour objet un véhicule automobile comprenant un agencement de carrosserie ayant tout ou partie des caractéristiques précédentes.

### Exposé de l'invention :

L'invention sera mieux comprise à la lecture de la description suivante d'un exemple non limitatif de l'invention, et à la lumière des dessins annexés sur lesquels :

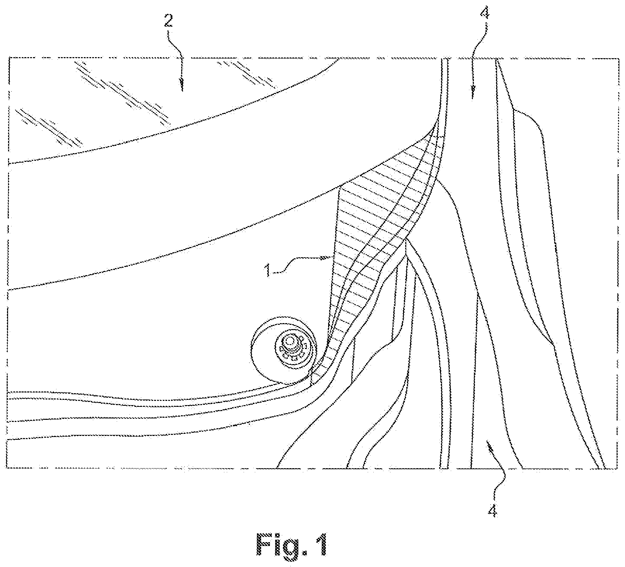

- la figure 1 représente en hachuré la zone de l'agencement de carrosserie selon l'invention, située à la base du pare-brise, entre un bord latéral de celui-ci et une aile adjacente du véhicule,

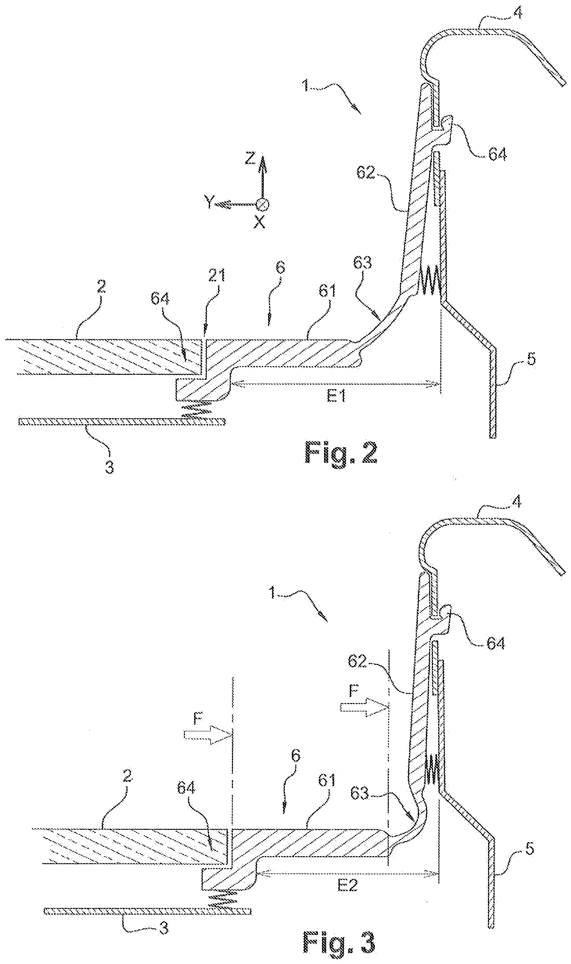

- la figure 2 représente l'agencement selon l'invention, dans une section schématique suivant un plan vertical ZY, dans lequel le pare-brise et la traverse inférieure de baie sont dans une position transversale éloignée de l'aile et du support d'aile associé, cette position résultant des dispersions géométriques de fabrication et de montage, et
- la figure 3 représente l'agencement de l'invention dans une section similaire à celle de la figure 1, cette section illustrant le pare-brise et la traverse inférieure de baie dans une position rapprochée de l'aile et du support d'aile associé, cette position résultant des dispersions géométriques de fabrication et de montage.

Dans l'ensemble de la description, on utilise classiquement le repère XYZ dans lequel X désigne la direction longitudinale avant-arrière du véhicule, orienté vers l'arrière, Y la direction transversale, orienté vers la droite du véhicule, et Z la direction verticale, orienté vers le haut.
Le terme « sensiblement » signifie dans la suite de l'exposé qu'un léger écart est admis autour d'une position ou d'une direction nominale déterminée. Par exemple « sensiblement vertical » doit être entendu au sens ou une variation de l'ordre de 5° autour de la position verticale est comprise dans le cadre de l'invention.

On a représenté à la figure 1 en hachuré une zone 1 de l'agencement de carrosserie selon l'invention, située à la base et sur un bord latéral du pare-brise.
En référence aux figures 2 et 3 qui illustrent plus en détail une section suivant YZ de cet agencement, on reconnait dans cette construction un pare-brise 2, une traverse inférieure de baie 3 (ou « TIB ») qui s'étend le long d'un bord inférieur du pare-brise 2 transversalement au véhicule, c'est-à-dire suivant la direction Y. L'agencement comprend également une aile 4 et un support d'aile 5. Le support d'aile 5 est fixé à la structure (non représentée) du véhicule. L'aile 4 comporte une partie supérieure recourbée vers l'intérieur du véhicule par-dessous une arête supérieure du support d'aile 5 et fixée sur une face intérieure de ce dernier. Le terme « intérieur » signifie que la pièce ou la face est tournée vers le compartiment moteur. On note que l'arête supérieure du support d'aile 5 et la partie retombante de l'aile 4 qui est fixée au support d'aile 5 forment une paroi sensiblement verticale, disposée sensiblement en vis à vie du bord latéral du pare-brise 2. Un espace E1, E2 mesuré suivant la direction transversale Y est ménagé entre chaque aile 4 (et/ou support d'aile 5) et un bord latéral 21 adjacent du pare-brise 2. L'agencement de carrosserie suivant l'invention comprend un obturateur latéral 6 (ou « OLGA ») fermant ledit espace E1, E2. L'obturateur latéral 6 a la forme générale d'une équerre dont une branche inférieure 61 coopère en contact avec le bord latéral 21 du pare-brise 2 et une branche supérieure 62 accrochée sur l'aile adjacente 4.

Les branches inférieures 61 et supérieure 62 sont reliées par une partie d'angle 63 formant charnière. Cette partie d'angle 62 est apte à se déformer pour absorber les dispersions géométriques et les déformations relatives d'une part entre le pare-brise 2 et la traverse inférieure de baie 3 et d'autre part entre l'aile 4 et le support d'aile 5. De façon schématique on a représenté à la figure 3 les dispersions géométriques du pare-brise 2 et de la traverse inférieure de baie 3 par les flèches F. Celles-ci représentent un décalage suivant la direction transversale Y du pare-brise 2 et de la traverse inférieure de baie 3 par rapport à leur position opposée, telle qu'illustré à la figure 2. Les figures 2 et 3 représentent le pare-brise 2 et la traverse inférieure de baie dans des positions respectivement éloignée et rapprochée de l'aile 4 et du support d'aile. Ces dispersions géométriques peuvent être de plusieurs millimètres d'un véhicule à l'autre. L'espace E1 est ainsi supérieur à l'espace E2 de quelques millimètres. Ces positions sont des positions extrêmes, l'ensemble des véhicules produits et intégrant un agencement de carrosserie selon l'invention devant présenter des configurations situées entre ces deux positions extrêmes.
La branche inférieure 61 oppose un effort résistant sur le bord latéral 21 du pare-brise 2 appliqué vers l'intérieur du véhicule suivant la direction transversale Y. Cet effort s'exerce également vers le haut. Dans la position représentée à la figure 2 (position du pare-brise 2 qui est éloignée de l'aile 4 et du support d'aile 5), la branche supérieure 62 est disposée en appui de façon légèrement inclinée contre une face sensiblement verticale de l'aile adjacente 4. L'inclinaison est typiquement comprise entre 5 et 15°. La branche supérieure 62 comprend au moins une patte de retenue 64 introduite dans un orifice correspondant de l'aile 4 destinée à accrocher la branche supérieure 62 à l'aile 4. La branche supérieure 62 est accrochée dans sa partie haute.
Dans la position représentée à la figure 3 (position du pare-brise 2 qui est rapprochée de l'aile 4 et du support d'aile 5), la branche supérieure 62 est disposée de façon sensiblement parallèle à la face d'appui (paroi intérieure précitée) de l'aile 4 adjacente et du support d'aile 5. La branche supérieure 62 est appliquée contre cette face d'appui.

Le passage d'une position telle qu'illustrée à la figure 2 à une position telle qu'illustrée à la figure 3 est réalisée par la déformation élastique de la partie d'angle 63 et par la modification de l'inclinaison de la branche supérieure 62 qui passe une position penchée à une position sensiblement verticale. La position transversale de la branche inférieure 61 est ainsi modifiée, cette dernière pouvant en fonction du besoin et des dispersions géométriques rencontrées être placée à distance ou au plus près de l'aile 4 et du support d'aile 5.
La branche inférieure 61 de l'obturateur latéral 6 comporte un renfoncement 64 dans lequel est placé le bord latéral 21 du pare-brise 2. Ce dernier et la branche inférieure 61 présentent des faces supérieures sensiblement affleurantes. Le terme « faces supérieures » signifie en l'espèce qu'elles sont tournées vers le haut.

Le renfoncement 64 est conformé dans une forme en équerre situé au bord de la branche inférieure 61 de l'obturateur 6. L'équerre a une partie horizontale disposée de façon à recouvrir un bord latéral correspondant de la traverse inférieure de baie 3. La branche inférieure 61 et la traverse inférieure de baie se chevauchent donc partiellement, dans une zone de jonction. Une partie du bord de la branche inférieure 61 est intercalée verticalement entre la traverse inférieure de baie 3 et le pare-brise 2.
La branche inférieure 61 est disposée sensiblement dans le prolongement du pare-brise 2, de façon sensiblement parallèle à celui-ci.
La déformation élastique localisée dans la partie d'angle est réalisé par l'orientation relative entre les deux branches (sensiblement à 90°) et par une épaisseur réduite de cette partie d'angle par rapport aux branches inférieure 61 et supérieure 62. Ces dernières sont globalement non déformables dans le contexte de l'invention : elles doivent avoir une structure et une tenue mécanique de nature à constituer un élément de carrosserie suffisamment robuste.
On a indiqué que la branche inférieure 61 opposait un effort résistant sur le bord latéral 21 du pare-brise 2. L'obturateur latéral 6 est sous contrainte entre le pare-brise 2 et l'aile 4 associée au support d'aile 5. L'obturateur 6 agit comme un ressort tendant à reprendre sa configuration d'origine. Il s'appuie contre la face d'appui constituée par l'aile 4 et le support d'aile 5 pour que la branche inférieure 61 soit appliquée par contact contre le bord latéral 21 du pare-brise 2. Aucun jeu résiduel n'est donc déploré entre le pare-brise 2 et l'obturateur 6, même si le pare-brise est dans une position éloignée de l'aile 4 et du support d'aile 5.
Lorsque le pare-brise 2 est plus proche de l'aile 4 en raison des dispersions, cet écart est compensé par la déformation élastique de l'obturateur 6 et le changement d'inclinaison de la branche supérieure 62.

## Revendications

1. Agencement de carrosserie d'un véhicule automobile comprenant un pare-brise (2), une traverse inférieure de baie (3) s'étendant le long d'un bord inférieur du pare-brise (2) et s'étendant transversalement au véhicule, une aile (4) et un support d'aile (5) étant disposés de chaque côté du véhicule de façon à encadrer la traverse inférieure de baie (3) avec un espace (E1, E2) ménagé entre chaque aile (4) et un bord latéral (21) adjacent du pare-brise (2), l'agencement comprenant un obturateur latéral (6) fermant ledit espace (E1, E2), l'obturateur latéral (6) ayant la forme générale d'une équerre **caractérisé en ce qu'**une branche inférieure (61) de l'équerre coopère en contact avec le bord latéral (21) du pare-brise (6) et une branche supérieure (62) de l'équerre est accrochée sur l'aile (4) adjacente, les branches (61, 62) étant reliées par une partie d'angle (63) formant charnière apte à se déformer pour absorber les dispersions géométriques et les déformations relatives entre d'une part le pare-brise (2) et la traverse inférieure de baie (3) et d'autre part l'aile (4) et le support d'aile (5).

2. Agencement selon la revendication 1, **caractérisé en ce que** l'obturateur (6) interposé entre le bord latéral (21) du pare-brise (2) et l'aile adjacente (4) est déformé élastiquement et oppose un effort résistant sur le bord latéral (21) du pare-brise (2) appliqué vers l'intérieur du véhicule suivant la direction transversale (Y) et vers le haut.

3. Agencement selon la revendication 2, **caractérisé en ce que** la branche inférieure (61) de l'obturateur latéral (6) comporte un renfoncement (64) dans lequel est placé le bord latéral (21) du pare-brise (2) de façon que ce dernier et la branche inférieure (61) présentent des faces supérieures sensiblement affleurantes.

4. Agencement selon la revendication 3, **caractérisé en ce que** le renfoncement (64) est conformé dans une forme en équerre bordant la branche inférieure (61) de l'obturateur (6), l'équerre ayant une partie horizontale disposée de façon à recouvrir un bord latéral correspondant de la traverse inférieure de baie (3).

5. Agencement selon l'une quelconque des revendications précédentes, **caractérisé en ce que** la branche inférieure (61) est disposée sensiblement dans le prolongement du pare-brise (2), de façon sensiblement parallèle à celui-ci.

6. Agencement selon l'une quelconque des revendications précédentes, **caractérisé en ce que** la branche supérieure (62) de l'obturateur latéral (6) est disposée en appui contre une face sensiblement verticale de l'aile (4) adjacente, la branche supérieure (62) comprenant au moins une patte de retenue (64) introduite dans un orifice correspondant de l'aile (4).

7. Agencement selon l'une quelconque des revendications précédentes, **caractérisé en ce que** la partie d'angle (63) a une épaisseur réduite rapport aux branches inférieure (61) et supérieure (62).

8. Véhicule automobile comprenant un agencement de carrosserie selon l'une quelconque des revendications précédentes.

## Patentansprüche

1. Karosserieanordnung eines Kraftfahrzeugs umfassend eine Windschutzscheibe (2), wobei ein unterer Karosserieöffnungsquerträger (3) sich entlang eines unteren Rands der Windschutzscheibe (2) erstreckt und sich quer zum Fahrzeug erstreckt, wobei ein Kotflügel (4) und ein Kotflügelhalter (5) an jeder Seite des Fahrzeugs so angeordnet sind, dass der untere Karosserieöffnungsquerträger (3) von einem zwischen jedem Kotflügel (4) und einem angrenzenden seitlichen Rand (21) der Windschutzscheibe (2) angeordneten Raum (E1, E2) umgeben ist, wobei die Anordnung einen den Raum (E1, E2) verschließenden seitlichen Verschluss (6) umfasst, wobei der seitliche Verschluss (6) die allgemeine Form eines Keils aufweist, **dadurch gekennzeichnet, dass** ein unterer Abschnitt (61) des Keils in Kontakt mit dem seitlichen Rand (21) der Windschutzscheibe (6) zusammenwirkt und ein oberer Abschnitt (62) des Keils am angrenzenden Kotflügel (4) befestigt ist, wobei die Abschnitte (61, 62) durch einen ein Scharnier bildenden Winkelteil (63) verbunden sind, der sich verformen kann, um die geometrischen Abweichungen und die entsprechenden Verformungen zwischen einerseits der Windschutzscheibe (2) und dem unteren Karosserieöffnungsquerträger (3) und andererseits dem Kotflügel (4) und dem Kotflügelhalter (5) zu absorbieren.

2. Anordnung nach Anspruch 1, **dadurch gekennzeichnet, dass** der zwischen dem seitlichen Rand (21) der Windschutzscheibe (2) und dem angrenzenden Kotflügel (4) angeordnete Verschluss (6) elastisch verformt wird und eine Widerstandskraft auf den seitlichen Rand (21) der Windschutzscheibe (2) zum Inneren des Fahrzeugs in der Querrichtung (Y) und nach oben entgegensetzt.

3. Anordnung nach Anspruch 2, **dadurch gekennzeichnet, dass** der untere Abschnitt (61) des seitlichen Verschlusses (6) einen Rücksprung (64) umfasst, in dem der seitliche Rand (21) der Windschutzscheibe (2) so angeordnet ist, dass Letztere und der untere Abschnitt (61) im Wesentlichen bündige Oberseiten aufweisen.

4. Anordnung nach Anspruch 3, **dadurch gekennzeichnet, dass** der Rücksprung (64) in einer den unteren Abschnitt (61) des Verschlusses (6) umrandenden Keilform ausgebildet ist, wobei der Keil einen horizontalen Teil aufweist, der so angeordnet ist, dass er einen seitlichen Rand entsprechend dem unteren Karosserieöffnungsquerträger (3) abdeckt.

5. Anordnung nach einem der vorhergehenden Ansprüche, **dadurch gekennzeichnet, dass** der untere Abschnitt (61) im Wesentlichen in der Verlängerung der Windschutzscheibe (2) im Wesentlichen parallel zu dieser angeordnet ist.

6. Anordnung nach einem der vorhergehenden Ansprüche, **dadurch gekennzeichnet, dass** der obere Abschnitt (62) des seitlichen Verschlusses (6) abgestützt gegen eine im Wesentlichen vertikale Fläche des angrenzenden Kotflügels (4) angeordnet ist, wobei der obere Abschnitt (62) wenigstens eine in eine entsprechende Öffnung des Kotflügels (4) eingeführte Haltelasche (64) umfasst.

7. Anordnung nach einem der vorhergehenden Ansprüche, **dadurch gekennzeichnet, dass** der Winkelteil (63) eine geringere Stärke im Verhältnis zu dem unterem (61) und dem oberem Abschnitt (62) aufweist.

8. Kraftfahrzeug umfassend eine Karosserieanordnung nach einem der vorhergehenden Ansprüche.

## Claims

1. Arrangement for a motor vehicle body comprising a windscreen (2), a lower window cross member (3) extending along a lower edge of the windscreen (2) and extending transversely to the vehicle, a wing (4) and a wing bracket (5) being arranged on each side of the vehicle so as to frame the lower window cross member (3) with a space (E1, E2) arranged between each wing (4) and an adjacent side edge (21) of the windscreen (2), the arrangement comprising a side seal (6) closing said space (E1, E2), the side seal (6) having the general shape of an angle bracket, **characterized in that** a lower arm (61) of the angle bracket engages in contact with the side edge (21) of the windscreen (6) and an upper arm (62) of the angle bracket is fastened to the adjacent wing (4), the arms (61, 62) being connected by a corner portion (63) forming a hinge capable of deforming in order to absorb the geometrical dispersions and the relative deformations between, on the one hand, the windscreen (2) and the lower windscreen cross member (3) and, on the other hand, the wing (4) and the wing bracket (5).

2. Arrangement according to Claim 1, **characterized in that** the side seal (6) interposed between the side edge (21) of the windscreen (2) and the adjacent wing (4) is deformed elastically and opposes a resisting force on the side edge (21) of the windscreen (2) applied towards the interior of the vehicle in the transverse direction (Y) and upwards.

3. Arrangement according to Claim 2, **characterized in that** the lower arm (61) of the side seal (6) includes a recess (64), into which the side edge (21) of the windscreen (2) is located in such a way that the latter and the lower arm (61) exhibit substantially flush upper surfaces.

4. Arrangement according to Claim 3, **characterized in that** the recess (64) is configured in the form of an angle bracket adjacent to the lower arm (61) of the seal (6), the angle bracket having a horizontal portion disposed in such a way as to cover a corresponding side edge of the lower window cross member (3).

5. Arrangement according to any of the preceding claims, **characterized in that** the lower arm (61) is disposed substantially as a continuation of the windscreen (2) in a manner substantially parallel thereto.

6. Arrangement according to any of the preceding claims, **characterized in that** the upper arm (62) of the side seal (6) is disposed bearing against a substantially vertical surface of the adjacent wing (4), the upper arm (62) comprising at least one retaining lug (64) introduced into a corresponding orifice of the wing (4).

7. Arrangement according to any of the preceding claims, **characterized in that** the corner portion (63) has a reduced thickness in relation to the lower arms (61) and the upper arms (62).

8. Motor vehicle comprising a body arrangement according to any of the preceding claims.
